# EUROPEAN PATENT SPECIFICATION

(11) **EP 1 388 997 B1**
(45) Date of publication and mention of the grant of the patent: **27.04.2011**
(21) Application number: 02078251.2
(22) Date of filing: 07.08.2002
(51) Int. Cl.: H04M 7/00, H04M 3/56

(54) **System and method for three-party call service**
System und Verfahren für 3-Teilnehmeranrufsservice
Système et méthode pour service de conférence à trois

(43) Date of publication of application: 11.02.2004
(73) Proprietor: Telefonaktiebolaget LM Ericsson (publ), 164 83 Stockholm (SE)
(72) Inventor: Sanchez Cembellin, Jose Antonio, 28045 Madrid (ES); Cardeno Triano, Manuel, 28942 Madrid (ES)
(74) Representative: Elzaburu Marquez, Alberto

(56) References cited:
- US-A1- 2002 076 025

## Description

### FIELD OF THE INVENTION

The present invention generally relates to provision and support of Three-Party Call Service between Telephony domains and Internet domains. More specifically, the present invention relates to system and methods for supporting Three-Party Call Service in Internet domains that inter-work with Telephony domains.

### BACKGROUND

There is currently a great interest world wide in providing inter-working between Telephony and Internet Protocol (IP) based networks in order to extend their respective services and advantages into the other network. One of the main reasons behind this interest resides on the higher flexibility and lower operating cost characterising the IP-based networks when transporting Switched Circuit Network (abbreviated as SCN) related signalling information between signalling nodes. An inter-working node acting as the border between corresponding domains, the Telephony domain and the IP domain, commonly represents such inter-working between Telephony and IP-based networks. This inter-working node is in charge of attending all the incoming requests from the IP domain as well as of sending all the traffic coming from the Telephony domain to the IP domain. An exemplary interworking between telephony and internet domains to provide multiparty conference services is shown in the publication US-2002/076025 A1, wherein the problem of "tele-working" is addressed. The solution in this document provides for a collaboration services suite that includes a Virtual Team Environment (VTE) Client for each team-member, each VTE-Client encompassing one or more communication devices connected to the PSTN network, and one or more packet-based communication devices connected to a packet network; and a VTE-Server in communication with the VTE-Clients to control interactions and communications involving one or more team-members. In this teaching, however, all the team-members must use a VTE-Client, or the like, before making use of the collaboration services suite; and all team-members, even those using a PSTN device, have the means to submit their user profile only through the packet network. These are quite significant limitations for applying this teaching in a general interconnection of users of an IP domain and users of a Telephony domain worldwide, these users not being included in any team, and the telephony users not necessarily having a connection to the IP network. Moreover, this document bases the exchange of multiparty conference-related information between users at application layer thanks to the VTE-Server and each VTE-client. However, other protocols may be used in the IP domain offering other advantages.

One of the preferred protocols in the IP domain for call/session control is the Session Initiation Protocol (SIP), which is now under specification by the SIP Working Group of the Internet Engineering Task Forces (SIP IETF WG), within the Transport Area. In fact, several SIP entities, the so called Call Status Control Function (CSCF), have been defined in the 3^{rd} Generation Partnership Project (3GPP) which allow the Switched Circuit Network and the IP multimedia domains being interconnected.

In this respect, it is noticeable the effort made in order to define protocol mapping mechanisms to make this inter-working possible between IP and Switched Circuit Networks (SCN). For example, the SIPPING Working Group within the Transport Area of the IETF defines the SIP-T framework to facilitate the interconnection of the Public Switched Telephone Network (PSTN) with the IP network. On the other hand, the Integrated Services Digital Network (ISDN) is nowadays a world wide spread network, shared by both fixed and mobile networks, wherein the ISDN User Part (ISUP) of a Signalling System #7 (SS7) is the signalling protocol that said ISDN makes use of. In this respect, the ISUP to SIP Mapping is another initiative from the SIP IETF WG, describing a way to perform the mapping between said two signalling protocols.

The current architectural proposals for this inter-working node, border between the Telephony and the IP domains, trend towards a Network Gateway (hereinafter referred to as NGW) approach, responsible for inter-working functions between Switched Circuit Networks running ISUP protocol and IP Packet Networks running SIP protocol for Call Control.

This Network Gateway (NGW) includes a Media Gateway (MGW), responsible for establishing call connections over a bearer network, and a Media Gateway Controller (MGC) responsible for implementing call control related procedures connected to the Media Gateway. Both entities communicate to each other by using a control protocol, which is described in the ITU-T Recommendation H.248, and is also followed up by the MEGACO Working Group within the Transport Area in the IETF. From a SIP point of view, the inter-working node acts as a SIP User Agent (SIP-UA) that is connected to some SIP proxy located in the IP domain.

In this scenario, needs have been detected for supporting supplementary services using specific signalling mechanisms. Moreover, new signalling mechanisms are required in said NGW and other entities in the SIP domain to support Supplementary Services traditionally existing in the Telephony domain like the aforementioned Three-Party Call Service (hereinafter referred to as 3PCS).

The SIP protocol, or rather some of the emerging drafts in this area, such as "SIP Service Examples" disclosed in the draft "draft-ietf-sip-service-examples-03.txt", are describing how some of the existing ISDN services, or those services from the Public Switched Telephony Network (PSTN), may be extended into the SIP world. Nevertheless, there is no teaching or consideration yet in respect of how this typical telephony service, Three-Party Call Service (3PCS), may enter into operation as connecting Telephony and IP domains.

### RELATED ART

The Three-Party call service in the Switched Circuit Network (SCN) is defined in separate ITU-T Recommendations, such as the ITU-T Recommendation Q.84.2, "General Recommendations on Telephone Switching and Signalling - Functions and Information Flows for Services in the ISDN - Stage 2 Description for Multiparty Supplementary Services - Clause 2 Three-Party Service", the ITU-T Recommendation I.254.2, "Integrated Services Digital Network (ISDN) - General Structure and Service Capabilities - Three-Party Supplementary Service", and the ITU-T Recommendation Q.734.2, "Specifications of Signalling System No. 7 - ISDN Supplementary Services - Stage 3 Description for Multiparty Supplementary Services Using Signalling System No. 7: Three-Party Service". These ITU-T Recommendations provide a general service description, corresponding ISDN access part, and signalling requirements for supporting the Three-Party Call Service (3PCS) in Public Networks using ISUP, respectively.

In a similar manner as for the ISDN Supplementary Services, the Three-Party Call Service (3PCS) as such has also been part of currently existing SIP drafts. There are several models proposed to cope with the different requirements of connectivity and scalability for multiparty calls as stated in the SIP draft 'Models for Multi Party Conferencing in SIP', wherein a Three-Party Call Service can be conceptually included.

Moreover, a separate draft has also been issued for this particular service in the SIP domain 'Third Party Call Control in SIP' stating that a Service Controller is the one who calls all participants in the conference, which does not actually reflect the nature of the corresponding SCN Three-Party Call Service as described in the ITU-T Recommendations.

Nowadays, there is no technical specification yet describing a valid mechanism for supporting Three-Party Call Service between respective users of SIP and SCN domains. In principle, valid mechanisms exist in both domains separately, but they do not harmonise enough to progress some information telling every user about some other users being connected to a current call. On the one hand, the telephony side supports some call control mechanism to inform the telephony end users that a Three Party call has been established or disconnected, such as by using the so-called "*Call Progress"* (CPG) messages, for example. On the other hand, the IP side supports some bearer related notifications, such as those carried out by the Real-time Transport Control Protocol (RTCP) packets, in order to inform the end users about how many users are putting media into a certain stream, and who these users are. The aforementioned RTCP complements a Real-time Transport Protocol (RTP) with some supervisory functions, RTP being the protocol actually providing end-to-end network transport functions suitable for applications transmitting real-time data, and thus generally referred to irrespective of whether the particular feature is an RTP or an RTCP matter. So, even though RTCP is able to deliver some information about who is putting media into a certain stream, such information coming from the IP side is beard through a Media Gateway (MGW), whereas the corresponding information coming from the Telephony side is transported through the Media Gateway Controller (MGC). In this situation, the only way to respectively mapping this information is an amendment on the H.248 Protocol standardised between said MGC and MGW. This solution does not seem very suitable due to the so different nature of information transported through said two entities.

So, though both domains have similar concerns about progressing information to tell every user that other users are connected to the call, each domain uses a different mechanism to exchange its own information, and this information is not even the same in both domains. This becomes a problem when the current physical structure of the ISUP-SIP gateway, the above NGW, is taken into account.

On the one hand, the Media Gateway Controller (MGC) handles the Three Party (hereinafter 3-Pty) related information to or from the telephony side, with 'Call Progress' (CPG) messages for example. In this respect, the MGC is acting as a SIP-UA from a SIP point of view. On the other hand, the multiparty related information to or from the IP side with RTCP packets is handled by the Media Gateway (MGW). Moreover, the H.248 protocol is used to communicate both the MGC and the MGW entities, and given that such physical separation is in the telephony or SCN side, current discussions and trends for a SIP-UA does not even deal with it.

Regarding the Real-time Transport Control Protocol (RTCP) packets exchanged at a bearer level, and provided that two SCN users are involved in the 3-Pty call, they will not show in most of the cases that there are two users behind the MGW in the SCN side. The MGW has no way to identify who are those SCN users since this information is not exchanged with the SCN side. Furthermore, the MGW is not able to separate which SCN user a voice sample comes from.

Currently, as a result of a different approach in both SCN and SIP domains, some already existing notifications of new users to be connected or disconnected in either side are lost at the ISUP-SIP inter-working node, that is, at the Network Gateway (NGW). In other words, current procedures do not prevent that new users are connected to an established call in some SCN-SIP inter-working scenarios without other users connected to the call being informed about it. In fact, sometimes the previously connected users have no way to know about new users joining the current call and this might be regarded as a sort of intrusion where previously connected users cannot detect that new users have joined the call.

US 6,269,159 patent to Cannon et al. proposes a method and apparatus to provide three way conferencing which allows a third party caller to call into an existing telephone call at a single line of a called party's telephone. In one embodiment, the called party may accept the conferencing of the third party caller based on a review of the received call related information, such as caller ID information. Therefore, this patent proposes that the telephone apparatus and/or the central office may maintain a directory of accepted third party callers which are allowed to automatically enter an existing telephone call at a called party, unless refused by the called party within a predetermined time.

This patent, however, only presents a particular solution applicable to conventional telephony networks, and the advantage of using this teaching is that a new user can enter into an already established telephone call without any user in this already established telephone call initiating the Three Party Call Service (3PCS) by placing other users on hold. However, the 3PCS is naturally intended not only for incoming calls but also for new called users invited to participate. Moreover, from Cannon's teaching one can appreciate that just the called user receiving the caller ID is notified of a third party candidate to participate, but nothing is said about notifications to other parties in this conventional telephone call. Consequently, as commented above, this patent is merely intended for allowing a third party to call into a telephone call already established between two other parties without any of these other parties initiating a call to said third party. Thus, the objective problem is still how to inform other parties in an established call of a third party accessing the call, said other parties being users of different domains respectively, such as SCN and SIP domains, and said third party being a called or a calling subscriber.

In this respect, an object of the present invention is to offer provision and support for Three-Party Call Service for users of a first domain calling to users of a second domain, both first and second domains having different mechanisms for supporting said Three-Party Call Service. In particular, an object of the present invention is to offer provision and support for Three-Party Call Service for SCN users calling to SIP subscribers as well as for SIP users calling to SCN subscribers.

Another object of the present invention is to accomplish the above object with as less impacts as possible in the currently proposed system architecture wherein SCN and IP domains mutually inter-work. A further object of the present invention is to accomplish previous objects with fewer and backward-compatible impacts in current SIP and ISUP protocol specifications.

### SUMMARY OF THE INVENTION

The above objects, among others, are accomplished in accordance with the invention by the provision of a telecommunication system according to claim 1 and a method according to claim 10 for providing Multiparty Conference services between a number of first users of a first Media Domain and a number of second users of a second Media domain, said first Media Domain in which multimedia sessions are signalled by a protocol operating in accordance with a Session Initiation Protocol (SIP), and said second Media Domain in which multimedia sessions are signalled by a second protocol.

The telecommunication system comprising a first Media Domain in which multimedia sessions are signalled by a protocol operating in accordance with a Session Initiation Protocol (SIP), a second Media Domain in which multimedia sessions are signalled by a second protocol, and a Network Gateway for inter-working of said first and second Media Domains, said telecommunications system thus intended for supporting multiparty conference services between a number of first users of said first Media Domain and a number of second users of said second Media domain, both first and second users being notified of being involved in a multiparty conference, and being notified of other participants in said multiparty conference. In particular, the telecommunication system also includes : means for establishing a first call between a first and a second participant; means for allowing the first or second participant to act as a Served user for establishing a second call with a third participant; means for allowing the Served user to merge the first and second calls into a multiparty conference; and a Conference Server at the domain of the Served user for mixing the media steams and signalling the media sessions

A method is also provided by the present invention for providing Multiparty Conference services between a number of first users of a first Media Domain and a number of second users of a second Media domain, said first Media Domain in which multimedia sessions are signalled by a protocol operating in accordance with a Session Initiation Protocol (SIP), and said second Media Domain in which multimedia sessions are signalled by a second protocol. The method comprises the steps of: establishing a first call between a first and a second participant; allowing the first or second participant to act as a Served user for establishing a second call with a third participant; allowing the Served user to merge the first and second calls into a multiparty conference; and mixing the media steams, and signalling the media sessions, at a Conference Server located at the domain of the Served user.

The method also includes the steps of:
- notifying each first user of a first Media Domain of being connected to a multiparty conference when requesting the establishment of said multiparty conference for each said first user;
- notifying each second user of a second Media Domain of being connected to a multiparty conference when requesting the establishment of said multiparty conference for each said second user;
- notifying each number of first and second users involved in a multiparty conference of other participants connected to or disconnected from said multiparty conference;
- notifying each first user of a first Media Domain of being disconnected from a multiparty conference when requesting the disconnection from said multiparty conference for each said first user; and
- notifying each second user of a second Media Domain of being disconnected from a multiparty conference when requesting the disconnection from said multiparty conference for each said second user.

In particular, said first and second users are notified of being involved in a multiparty conference, and are notified of other participants in said multiparty conference, with particular multiparty conference-related indications supported at each respective Media Domain. In this respect, a Network Gateway (NGW), which is located between said first and said second Media Domains, is responsible for mapping multiparty conference-related indications to be exchanged between said first and said second Media Domains

These multiparty conference-related indications comprise specific user-related call information and conference-related call information, wherein said conference-related call information comprises at least one information element selected from a group of information elements that includes:
- a conference status to indicate whether a multiparty conference has been established or disconnected;
- a list of users involved in the conference that may include indications on whether each user is currently connected or disconnected; and
- a conference origin to indicate which user, involved in the conference, has originated the multiparty conference-related notifications.

Also in particular, when a Served User has originated the multiparty conference from the first Media Domain, either said Served User or a Session Initiation Protocol User Agent (SIP-UA) associated to said Served User acts as a Conference Server, and is thus in charge of mixing the media streams coming from, and sent to, other participants in said multiparty conference.

### BRIEF DESCRIPTION OF DRAWINGS

The features, objects and advantages of the invention will become apparent by reading this description in conjunction with the accompanying drawings, in which:

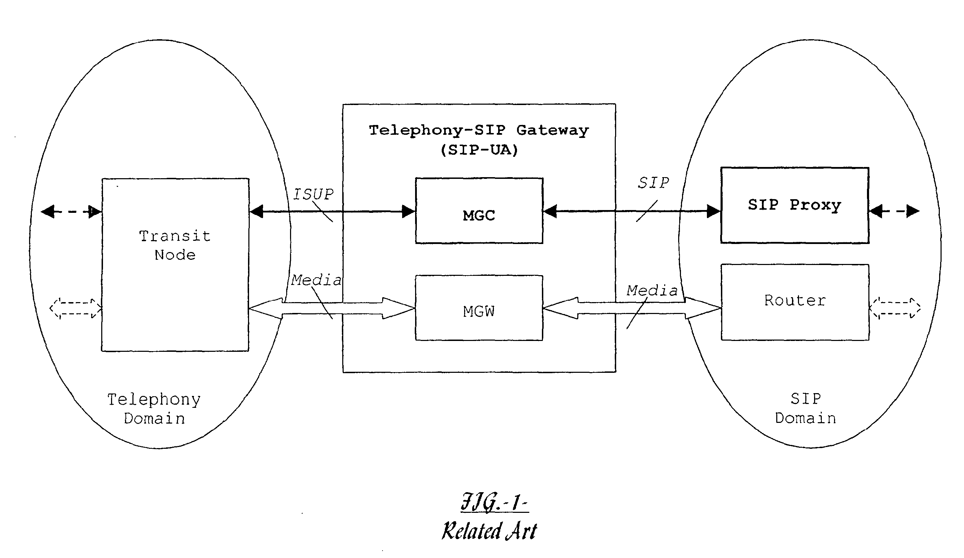

**FIG. 1** illustrates a basic overview of a Telephony domain inter-working with a SIP domain via a Network Gateway coupling Media Gateway and Media Gateway Controller.

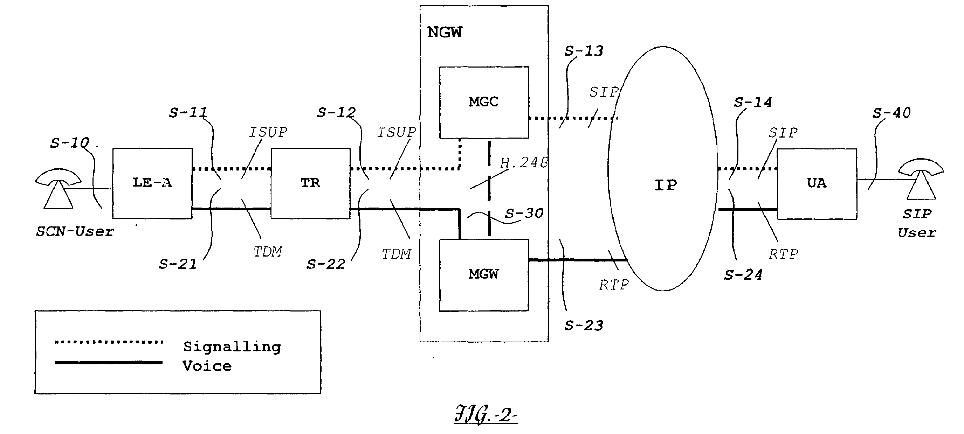

**FIG. 2** represents a system architecture comprising entities of a Telephony domain inter-working with entities of a SIP domain for signalling and media via a Network Gateway coupling a Media Gateway and a Media Gateway Controller.

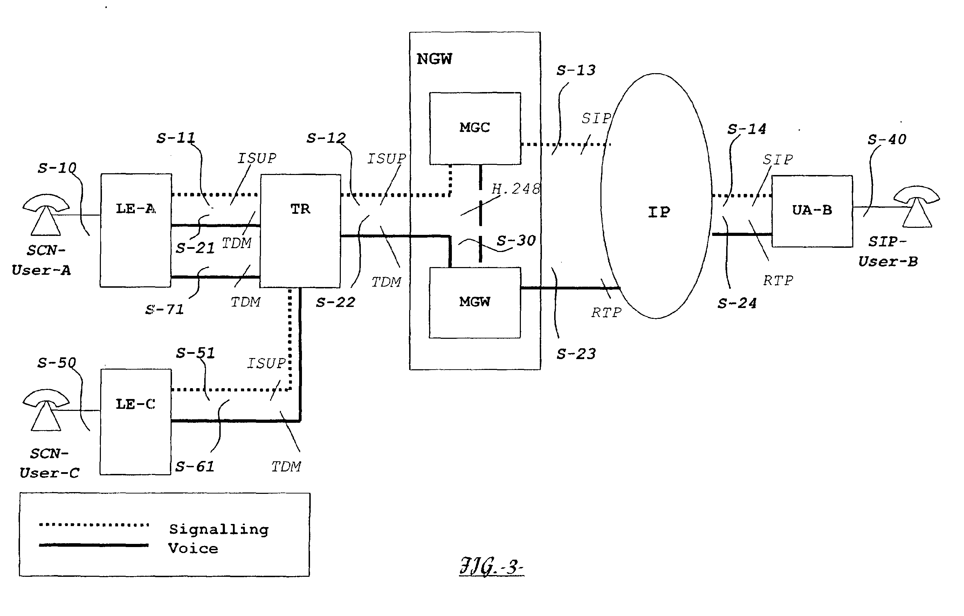

**FIG. 3** illustrates a sub-scenario for a three party call between two users of an SCN domain and a user of a SIP domain in a scenario where the Service Controller node is located in the SCN domain, the Service Controller node being the node where a Served User (SCN-User-A) is connected and the node actually establishing, controlling and disconnecting the 3-Pty conference.

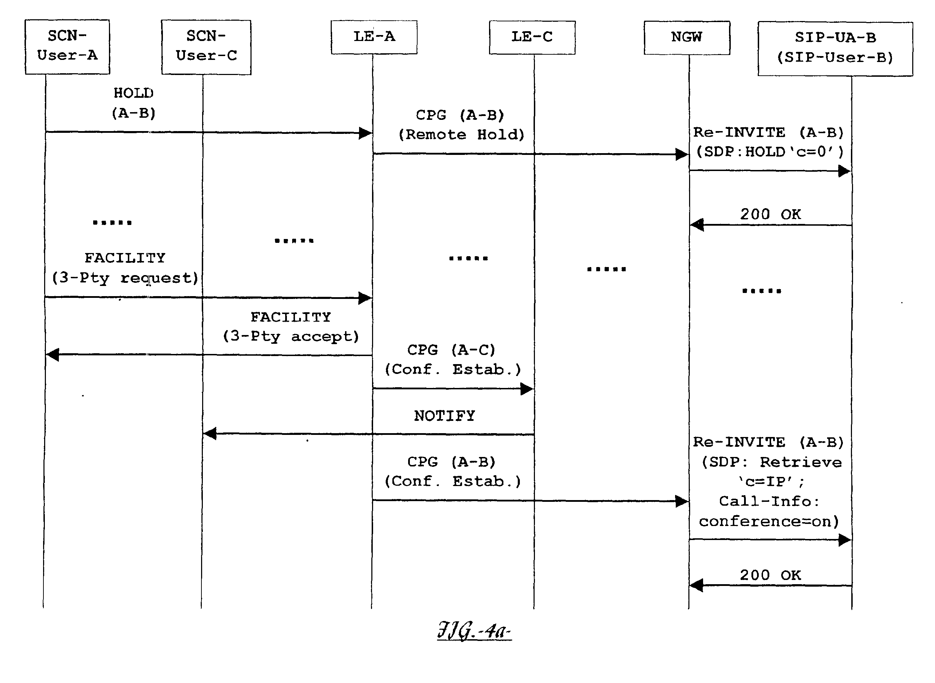

**FIG. 4a** presents a simplified flow sequence in a sub-scenario where the Service Controller is in the SCN domain, showing a 3-Pty call establishment starting by an SCN-User-A putting on hold a SIP session already established with a SIP-User-B and, further, the SCN-User-A issuing a 3-Pty request for the SCN-User-C to participate in a 3-Pty call.

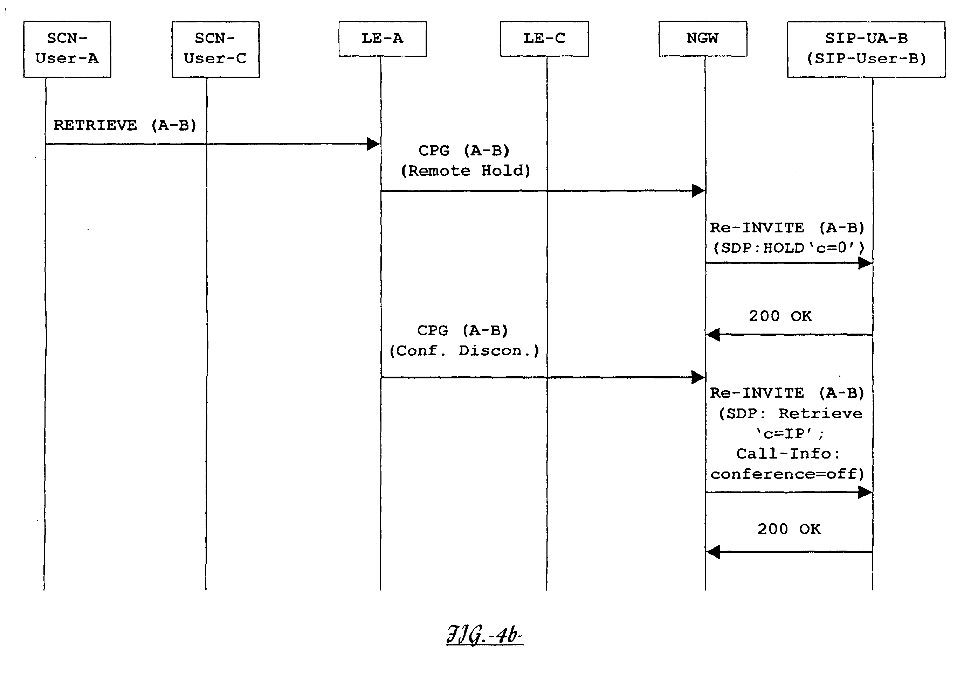

**FIG. 4b** presents a simplified flow sequence showing a 3-Pty call explicit disconnection of the SCN-User-C in the preceding use case, while said SCN-User-C was in an active call state with the SCN-User-A, and the SIP-User-B being on hold.

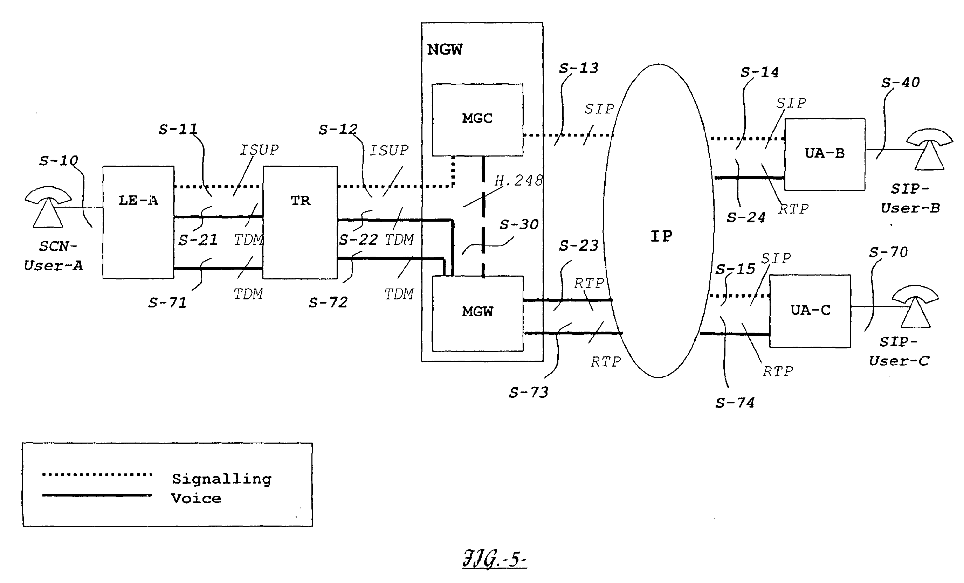

**FIG. 5** illustrates another sub-scenario for a three party call between one user of an SCN domain and two users of a SIP domain, the Service Controller node being located in the SCN domain, wherein a call has been established between an SCN user (SCN-User-A) and a first SIP user (SIP-User-B), whereas a second SIP user (SIP-User-C) requests a new call establishment towards the SCN user (SCN-User-A).

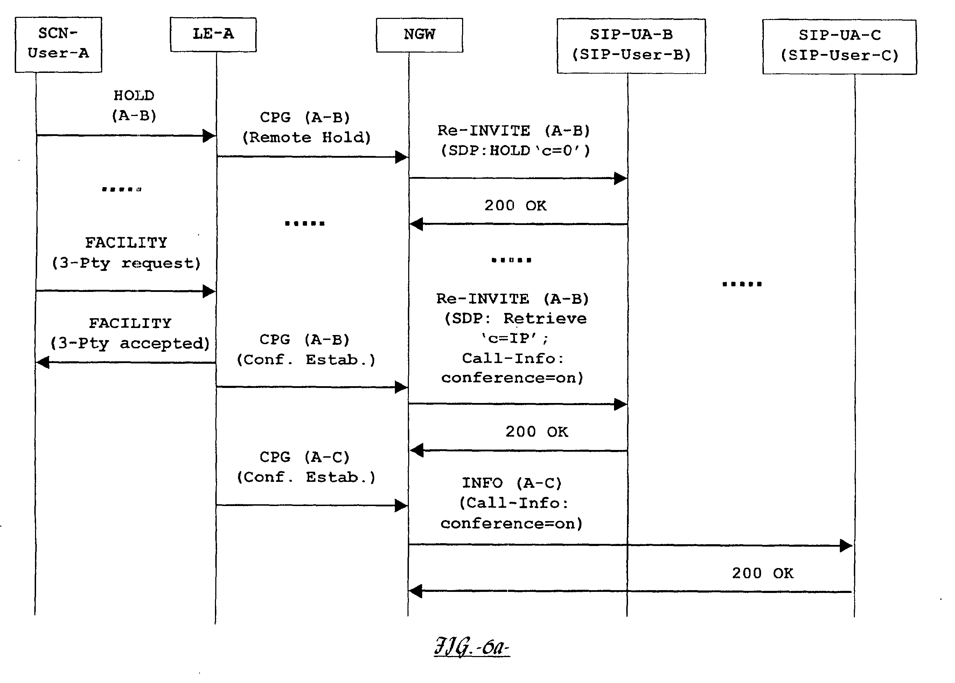

**FIG. 6a** presents a simplified flow sequence in another sub-scenario with the Service Controller located at the SCN domain, showing a 3-Pty call establishment starting when a call has been established between a telephony user (SCN-User-A) and a first SIP user (SIP-User-B), and a second SIP user (SIP-User-C) calls the SCN-User-A, the SCN-User-A putting on hold the first SIP user (SIP-User-B) and, further, the SCN-User-A issuing a 3-Pty request for the second SIP user (SIP-User-C) to participate in a 3-Pty call.

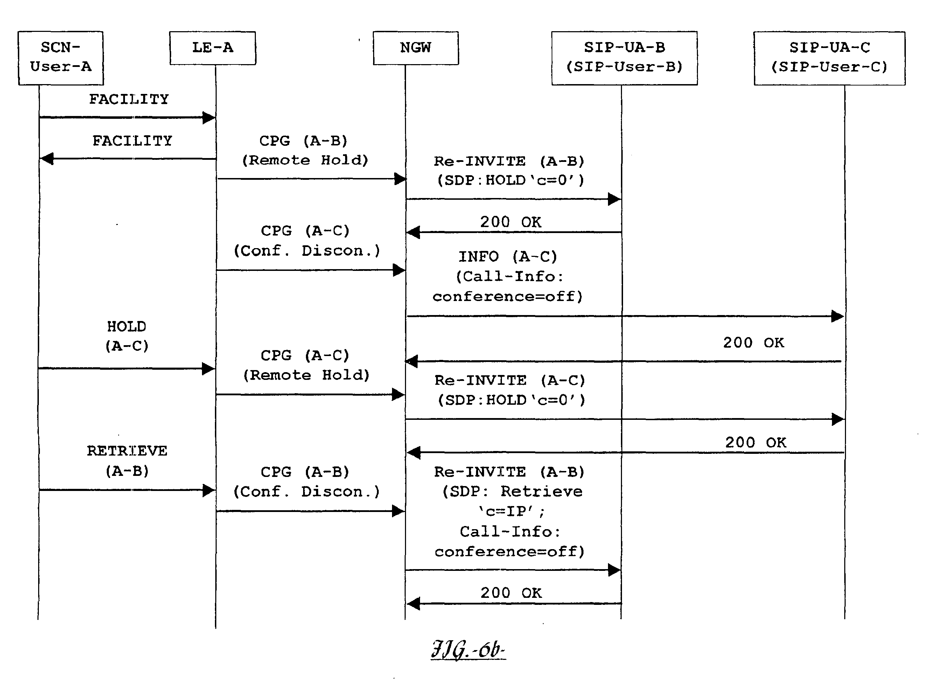

**Fig. 6b** shows the flow sequence that follows after having established a 3-Pty conference from SCN-User-A with SIP-User-B and SIP-User-C following the sequence of Fig. 6a, and when the SCN-User-A wants to create a private conference with the SIP-User-B.

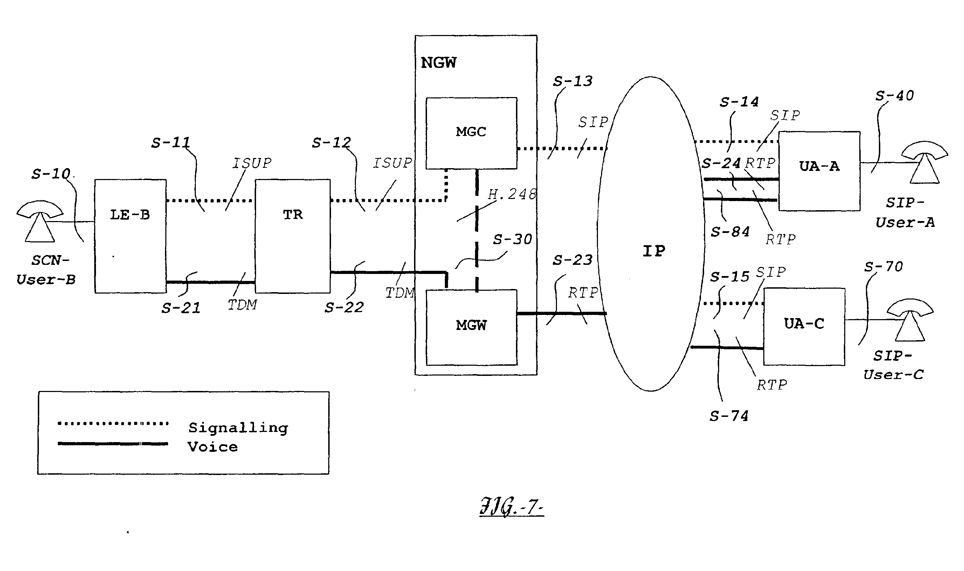

**FIG. 7** illustrates another sub-scenario for a three party call between one user of an SCN domain and two users of a SIP domain, the Service Controller node or Conference Server being located in the SIP domain, wherein a call has been established between a first SIP user (SIP-User-A) and an SCN user (SCN-User-B), whereas a second SIP user (SIP-User-C) requests a new call establishment towards the first SIP user (SIP-User-A).

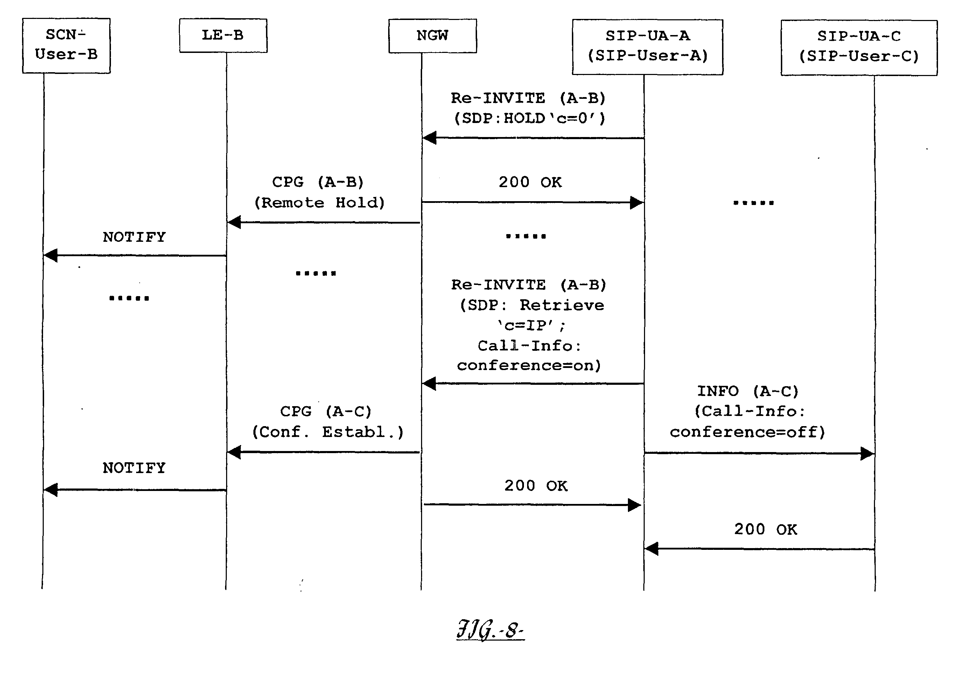

**FIG. 8** presents a simplified flow sequence in another sub-scenario with the Conference Server located at the SIP domain, showing a 3-Pty call establishment starting when a call has been established between a first SIP user (SIP-User-A) and a telephony user (SCN-User-B), and a second SIP user (SIP-User-C) calls the SIP-User-A, the first SIP user (SIP-User-A) putting on hold the telephony user (SCN-User-B) and, further, the SIP-User-A issuing a 3-Pty request for the second SIP user (SIP-User-C) to participate in a 3-Pty call.

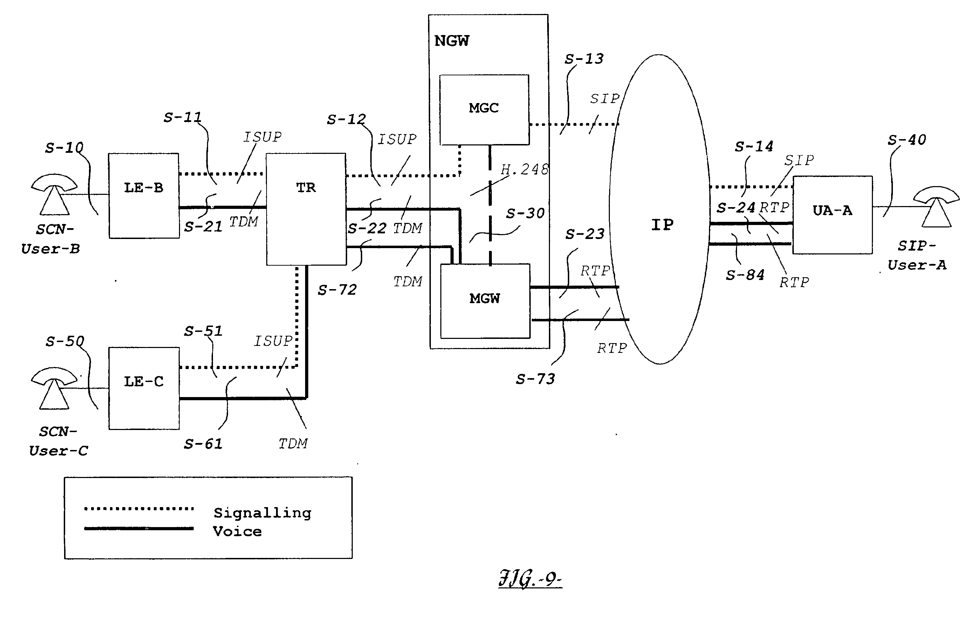

**FIG. 9** illustrates another sub-scenario for a three party call between two users of an SCN domain and one user of a SIP domain, the Service Controller node or Conference Server being located in the SIP domain, wherein a call has been established between a SIP user (SIP-User-A) and a first SCN user (SCN-User-B), whereas a second SCN user (SCN-User-C) requests a new call establishment towards the SIP user (SIP-User-A).

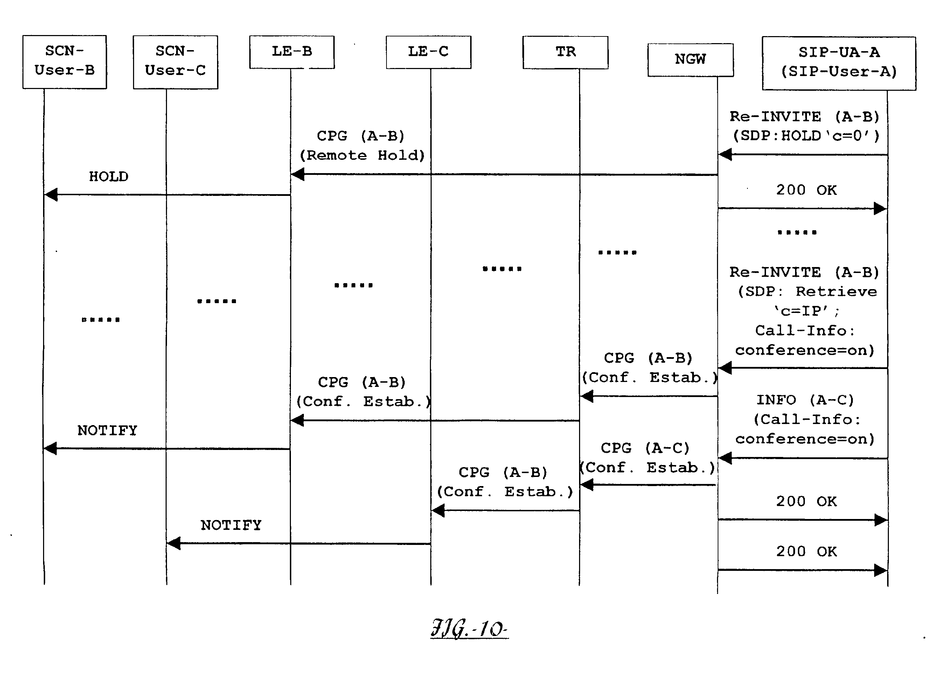

**FIG. 10** presents a simplified flow sequence in another sub-scenario with the Conference Server located at the SIP domain, showing a 3-Pty call establishment starting when a call has been established between a SIP user (SIP-User-A) and a first telephony user (SCN-User-B), and a second telephony user (SCN-User-C) calls the SIP-User-A, the SIP user (SIP-User-A) putting on hold the first telephony user (SCN-User-B) and, further, the SIP-User-A issuing a 3-Pty request for the second telephony user (SCN-User-C) to participate in a 3-Pty call.

### DETAILED DESCRIPTION OF PREFERRED EMBODIMENTS

The following describes currently preferred embodiments of a system and method to provide and support Multiparty Call Services for SCN users calling to SIP subscribers as well as for SIP users calling to SCN subscribers. The currently preferred embodiments following this are simply referred to Three Party Call services for the sake of simplicity, whilst anyone skilled in the art will appreciate that the teaching is perfectly applicable to Multiparty Conference services as well.

Generally speaking and accordingly with an aspect of the present invention, call control mechanisms in the IP side are completed to extend the call control related notifications coming from the telephony or SCN side. More precisely, extensions are introduced to the SIP protocol in order to appropriately handle notifications coming from the telephony side (hereinafter also referred to as SCN) in '*Call Progress*' (CPG) messages.

A basic architecture overview is shown in Fig. 2 to illustrate the different entities and interfaces involved when a call is established between a user of an SCN domain (SCN-User) and a user of a SIP domain (SIP-user). An SCN-user is connected (S-10) with a Local Exchange (LE-A) typically with a Digital Subscriber Signalling system number 1 (DSS1) protocol. The LE-A communicates with a Transit Exchange (TR) by using ISUP for signalling (S-11) and Time Division Multiplex (TDM) for voice (S-21). The TR communicates with a Media Gateway Controller (MGC) by using ISUP for signalling (S-12), and with a Media Gateway (MGW) by using Time Division Multiplex (TDM) for voice (S-22). Both MGC and MGW are included in a Network Gateway (NGW) that acts as a first SIP User Agent (SIP-UA) towards the IP network. The MGC is thus arranged for bridging ISUP messages (S-12) to appropriate SIP signalling (S-13) submitted to the IP network toward (S-14) a second SIP-UA where the SIP user is accessing (S-40). The MGW is in charge of adapting and transmitting through appropriate codecs the TDM frames (S-22) to Real-time Transmission Protocol (RTP) streams (S-23) addressed via an IP network toward (S-24) the above second SIP-UA. The MGC controls and communicates (S-30) with the MGW via a protocol operating in accordance with H.248 protocol specifications.

Thus, for signalling from ISUP to SIP, extensions are introduced to SIP (S-13, S-14) messages for transporting new 3-Pty related information, which is generated at the MGC from corresponding notifications received from the SCN domain in CPG messages (S11, S-12). For instance, when a 3-Pty call has been established or disconnected. Regarding signalling from SIP to ISUP, these SIP extensions, when received in the MGC from the IP domain, are used to generate the corresponding CPG messages toward the SCN domain.

Regarding the Real-time Transport Control Protocol (RTCP) packets exchanged at a bearer level, they are still handled in a close manner as before for any RTP based media communication. Though these RTCP packets can be used to identify the participants in the call once the call has been established, accordingly with another aspect of the present invention, they are also used to exchange some minimum conference related call control information.

For the sake of clarity, the preferred or suitable embodiments can be better described on per Service Controller domain basis, a Service Controller being logically associated with the user demanding a Three Party Call Service, thus resulting in two basic scenarios, each one with several use cases. A first scenario where a Service Controller entity is located in the SCN domain, and a second scenario where a Service Controller entity is located in the SIP domain.

In accordance with an aspect of the present invention there are several sub-scenarios for the above first scenario:
- a first sub-scenario wherein a call has been established between a first SCN user (SCN-User-A) and a SIP user (SIP-User-B), whereas a second SCN user (SCN-User-C) requests a new call establishment towards the first SCN user (SCN-User-A).
- a second sub-scenario wherein a call has been established between a first (SCN-User-A) and a second (SCN-User-B) SCN users, and a SIP user (SIP-User-C) requests a new call establishment towards the first SCN user (SCN-User-A).
- a third sub-scenario wherein a call has been established between an SCN user (SCN-User-A) and a first SIP user (SIP-User-B), whereas a second SIP user (SIP-User-C) requests a new call establishment towards the SCN user (SCN-User-A).

These three sub-scenarios have in common that a user in the SCN domain (hereinafter referred to as the Served User) is the one receiving two calls and finally issuing a request to merge both calls into a 3-Pty call. Generally, a Served User can be either the calling or the called user in either said two calls. The option chosen for use cases following this are merely a convention under the different above sub-scenarios.

The Local Exchange (LE-A) in Fig. 3 represents the Service Controller node, which is the node where a Served User (SCN-User-A) is connected and the node actually establishing, controlling and disconnecting the 3-Pty conference.

For example, provided that an SCN-User-A in Fig. 3 is the Served User, the LE-A acts as the Service Controller node and distributes the voice samples coming from the SCN-User-A toward an SCN-User-C and a SIP-User-B, the voice samples coming from an SCN-User-C toward an SCN-User-A and a SIP-User-B, and the voice samples coming from a SIP-User-B toward an SCN-User-A and an SCN-User-C. The Served User, the SCN-User-A in this example, is responsible for ensuring that both calls are compatible before issuing the 3-Pty service request. However, the Service Controller node, LE-A in this example, is responsible for performing the required compatibility checks and for selecting the most appropriate codecs to ensure compatibility between the users to be connected. In this respect, the other users to be connected as a result of 3-Pty service request, SIP-User-B and SCN-User-C in this example, are not required to perform any additional check.

Regarding other entities in this scenario, the Network Gateway is not supposed to have any intelligence related to the 3-Pty service, being its role the mapping between SCN-originated indications carried out in CPG messages, and specific SIP-based indications carried out in SIP extensions, the latter provided in accordance with an aspect of the present invention, and included in SIP Re-INVITE and INFO methods.

Different use cases are described following this for some of the above sub-scenarios within the first scenario in which a Service Controller entity is located in the SCN domain. The below sequences show relevant signalling exchanged between the entities involved in a 3-Pty service. Notice that, for the sake of clarity, just part of the signalling information is shown in each sequence. Any other sequences not considered below can be easily derived from a skilled person using similar call control mechanisms.

Fig. 3 illustrates a first sub-scenario wherein a call has been established between a first SCN user (SCN-User-A) and a SIP-User-B, whereas a second SCN-User (SCN-User-C) requests a new call establishment towards the first SCN user (SCN-User-A), within a first scenario in which the Served User is the SCN-User-A and the Service Controller node is the LE-A.

A first use case to show in the above sub-scenario is a call establishment for which Fig. 4a presents a flow sequence accordingly with a preferred embodiment. The mechanism starts by the SCN-User-A putting on hold a SIP session already established with the SIP-User-B. Therefore, SCN-User-A sends a "HOLD (A-B)" toward the Service Controller (LE-A) which in turn sends a CPG message indicating "Remote Hold between A-B users" toward an MGC included in a NGW. This mechanism makes use of Session Description Protocol (SDP) means and, more precisely, by setting IP address in 'c' SDP parameter equal to 0.0.0.0 in a Re-INVITE SIP method. Thus, the NGW sends said Re-INVITE (A-B) indicating said 'c' SDP parameter value toward a SIP User Agent (SIP-UA-B) connected to the SIP-User-B. The SIP-User-B is now on hold after having successfully answered with a 200 OK return code.

Then and not shown in Fig. 4a, SCN-User-A is talking with the second SCN-User (SCN-User-C) until SCN-User-A decides to initiate a request to establish a Three Party Call Service including the SIP-User-B and the second SCN-User (SCN-User-C).

The sequence in Fig. 4a continues when the SCN-User-A initiates such 3-Pty request toward its Local Exchange (LE-A) by sending a FACILITY SIP method indicating 3-Pty request. The LE-A accepts back such request also with a FACILITY SIP method, and sends toward the Local Exchange (LE-C) in charge of the SCN-User-C a first CPG message requesting the 3Pty conference establishment between A and C parts of the call, namely SCN-User-A and SCN-User-C. The LE-C sends a NOTIFY SIP method toward the SCN-User-C to inform about the ongoing 3-Pty call establishment. The LE-A also sends a second CPG message toward the NGW border between the SCN and SIP domains requesting the 3Pty conference establishment between A and B parts of the call, namely SCN-User-A and SIP-User-B. In accordance with another aspect of the present invention, the 'Conference Establishment' indicator carried out in this latest CPG message is not discarded by the ISUP-SIP Gateway, namely by the NGW, as done at present, but rather mapped and sent toward the SIP domain.

The NGW sends then a Re-INVITE SIP method toward the SIP-UA-B in charge of the SIP-User-B still on hold. The Re-INVITE including a 'c' SDP parameter indicating the IP address of the SCN-User-C incorporated to the 3-Pty call, and also including an amended SIP header '*Call-Info*' with a mapped 'Conference' indicator set on. Upon receipt of a successful return code (200 OK) from the SIP-UA-B, the 3-Pty call is established being each participant aware of all other participants, thus accomplishing an object of the present invention.

As commented above, new arguments are added to the current '*Call-Info*' SIP general header in accordance with an aspect of the present invention and in order to let each participant in a 3-Pty call know about other participants in said call. A conventional '*Call-Info*' SIP general header is shown below:

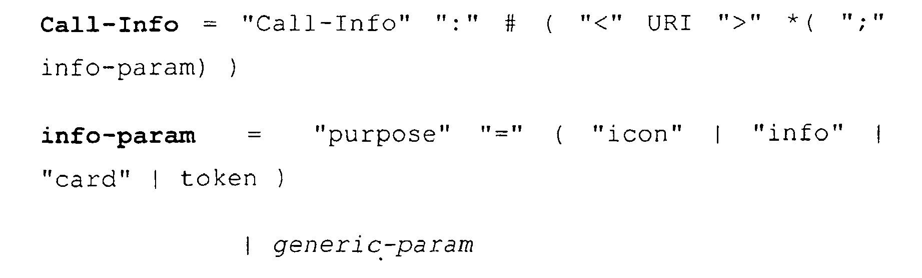

This SIP header is modified, in accordance with an aspect of the present invention, as shown following this, in order to provide a new '*Call-Info*' SIP general header while the new format still being backwards compatible, so that older implementations might still work as they currently do when receiving the existing structure. That is, new arguments in the new '*Call-Info*' header shown below, if not understood, may be just discarded.

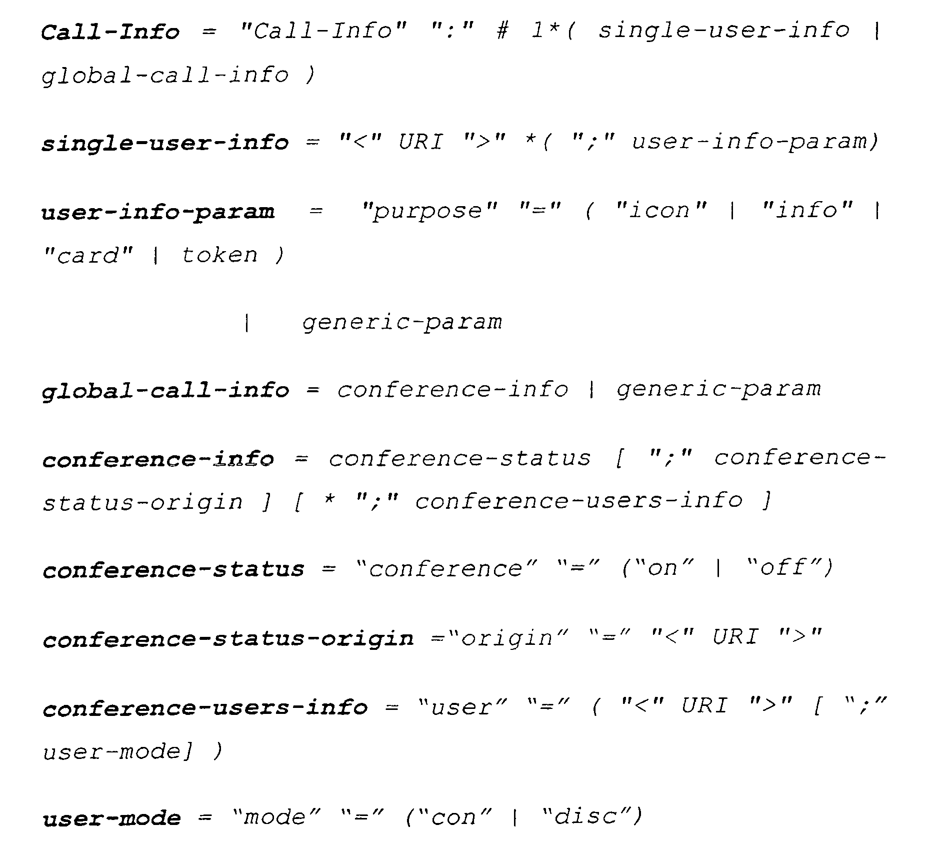

The above new structure proposes a differentiation between specific user call information, such as the one in '*user-info-param*'*,* and a more global information concerning the whole call, such as the one given in '*global-call-info*'*.*

In accordance with a preferred embodiment, there is a new argument '*single-user-info*' for collecting the arguments currently included in the existing *'info-param*'*.* This new argument thus keeps on providing the same user-dependant information:

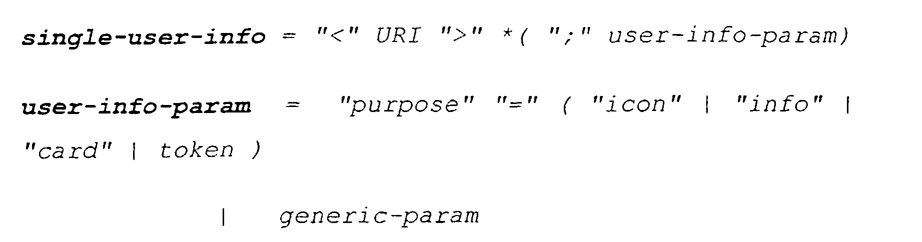

However, the generic call information is grouped within a new argument '*global-call-info*'*,* where just some conference related arguments have been explicitly listed for the purpose of the present invention:

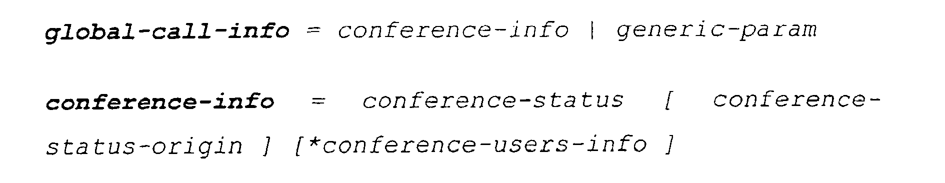

The usage described above for *'Call-Info',* in respect of the first sub-scenario given within the first scenario in which the Service Controller node is located in the SCN domain, is focused on a basic 'Conference Establishment' indication just covering the inter-working between SIP and SCN networks. This is what the argument *'conference-status'* is intended for in the new *'Call-Info'* parameter description:

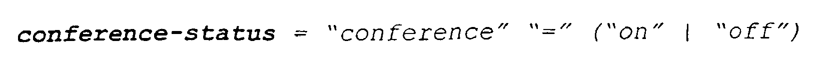

There is no need to go further with other arguments in the above *'Call-Info'* SIP header for the present use case. Other use cases further commented in the description offer other clues for the remaining arguments provided for said *'Call-Info'* SIP header.

Another use case within a currently preferred embodiment occurs for an explicit disconnection of the SCN-User-C in the preceding use case. More precisely, an explicit disconnection of this SCN-User-C while said SCN-User-C was in an active call state with the SCN-User-A, and prior to establishment of the 3-Pty call, that is, when the SIP-User-B had been put on hold. Once SCN-User-A has disconnected the SCN-User-C, the Service Controller (LE-A) shown in Fig. 4b starts re-arranging the 3-Pty conference status by recovering the call with the SIP-User-B previously put on hold. Therefore, SCN-User-A sends a RETRIEVE SIP method towards the LE-A which in turn sends a CPG towards the NGW indicating that the conference has been disconnected. The NGW sends then a Re-INVITE SIP method toward the SIP-UA-B in charge of the SIP-User-B still on hold. The Re-INVITE including a 'c' SDP parameter indicating the IP address of the SCN-User-C disconnected from the 3-Pty call, and also including an amended SIP header '*Call-Info*' with a mapped 'Conference' indicator set off. Upon receipt of a successful return code (200 OK) from the SIP-UA-B, the 3-Pty call as such is disconnected being both participants, SCN-User-A and SIP-User-B, aware of each other in a normal call.

Another interesting use case under the first scenario is the establishment of a 3-Pty call for the above third sub-scenario where, as illustrated in Fig. 5, a call has been established (S-21, S-22, S-23, S-24) between an SCN user (SCN-User-A) and a first SIP user (SIP-User-B), whereas a second SIP user (SIP-User-C) requests (S-15, S-13, S-12, S-11) a new call establishment towards the SCN user (SCN-User-A).

The flow sequence in Fig. 6a starts when a call has been established between a telephony user (SCN-User-A) and a first SIP user (SIP-User-B). Then, a second SIP user (SIP-User-C) calls the SCN-User-A. As in a previous use case, the SCN-User-A put on hold the currently established call toward the Service Controller node (LE-A). The LE-A sends a CPG message indicating 'Remote Hold' toward the NGW that issues a Re-INVITE SIP method including an IP address in 'c' SDP parameter equal to 0.0.0.0 to indicate the SIP User Agent (SIP-UA-B), where SIP-User-B is connected, that the call is now 'on hold'.

At this stage, being the SIP-User-B on hold and not shown in Fig. 6a, the SCN-User-A is talking to SIP-User-C until said SCN-User-A decides to initiate a request to establish a 3-Pty call including the SIP-User-B and the SIP-User-C.

The sequence in Fig. 6a continues when the SCN-User-A initiates such 3-Pty request toward its Local Exchange (LE-A) by sending a FACILITY SIP method indicating 3-Pty request. The LE-A accepts back such request also with a FACILITY SIP method, and sends toward the Network Gateway (NGW), which is acting in the border between the SCN and SIP domains, a first CPG message requesting the 3-Pty conference establishment between A and B parts of the call, namely between SCN-User-A and SIP-User-B.

The NGW sends then a Re-INVITE SIP method toward the SIP-UA-B in charge of the SIP-User-B still on hold. The Re-INVITE including a 'c' SDP parameter to indicate the IP address of the SIP-User-C incorporated to the 3-Pty call, and also including an amended SIP header 'Call-Info' with a mapped 'Conference' indicator set on. Next, the NGW sends an INFO SIP method toward the SIP-UA-C in charge of the SIP-User-C. This INFO SIP method also including an amended SIP header '*Call-Info*' with a mapped 'Conference' indicator set on.

Upon receipt of a successful return code (200 OK) from the SIP-UA-B and another from the SIP-UA-C, the 3-Pty call is established being each participant aware of all other participants, thus accomplishing an object of the present invention.

A still further interesting use case under the first scenario is the creation of a private communication between a Served User (SCN-User-A) and the user who had been in an 'on hold' state prior to the establishment of a 3-Pty conference under the above third sub-scenario, namely the SIP-User-B.

Both remote users in this third sub-scenario, SIP-User-B and SIP-User-C, are SIP users. So, the user who has established the 3-Pty conference and has thus informed the other users about it, namely the SCN-User-A, is a telephony user that wants to create a private conversation with a SIP user at the other side of the ISUP-SIP inter-working gateway, namely the NGW.

In this respect, Fig. 6b shows the flow sequence that follows after having established a 3-Pty conference from SCN-User-A with SIP-User-B and SIP-User-C, and when the SCN-User-A wants to create a private conference with the SIP-User-B.

As shown in Fig. 6b, the SCN-User-A initiates a 3-Pty request toward its Local Exchange (LE-A) by sending a FACILITY SIP method indicating 3-Pty request. The LE-A accepts back such request also with a FACILITY SIP method, and sends a first CPG message indicating 'Remote Hold' toward the NGW for the SIP-User-B, and a second CPG message indicating 'Disconnection of Conference' toward the NGW for the SIP-User-C.

Upon receipt of the first CPG message, the NGW issues a Re-INVITE SIP method including an IP address in 'c' SDP parameter equal to 0.0.0.0 to indicate the SIP User Agent (SIP-UA-B), where SIP-User-B is connected, that the call is now 'on hold'. Upon receipt of the second CPG message, the NGW issues an INFO SIP method toward the SIP-UA-C in charge of the SIP-User-C, this INFO SIP method also including an amended SIP header '*Call-Info*' with a mapped 'Conference' indicator set off.

At this stage, the SCN-User-A wants to put the SIP-User-C on hold and sends a HOLD message to its Local Exchange (LE-A) to this end. The LE-A sends a CPG message indicating 'Remote Hold' toward the NGW that issues a Re-INVITE SIP method including an IP address in 'c' SDP parameter equal to 0.0.0.0 to indicate the SIP User Agent (SIP-UA-C), where SIP-User-C is connected, that the call is now 'on hold'.

Further, the SCN-User-A sends a RETRIEVE SIP method toward the LE-A to create the private communication with the SIP-User-B. Then, LE-A sends a corresponding CPG indicating 'Disconnection of Conference' toward the NGW for the SIP-User-B. The NGW sends then a Re-INVITE SIP method toward the SIP-UA-B in charge of the SIP-User-B still on hold. The Re-INVITE including a 'c' SDP parameter to indicate the IP address of the SIP-User-C disconnected from the 3-Pty call, and also including an amended SIP header *`Call-Info'* with a mapped 'Conference' indicator set off.

Other use cases may be described with the same or similar approach in accordance with the invention, for these and other sub-scenarios without substantially adding further features to those presented above.

As already anticipated above, new arguments are added to the current *'Call-Info'* SIP general header in accordance with an aspect of the present invention and in order to let each participant in a 3-Pty conference know about other participants in said call. In this respect, other arguments are included in the *'Call-Info'* SIP header, which are described below, for the conference users to be aware, not only about being participating in a conference, but rather on who are the rest of the participants:

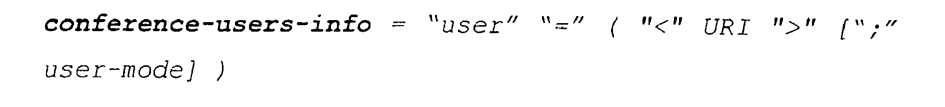

This argument is intended for multiparty conferences in the SIP side rather than just applying to 3-Pty calls. Moreover, spreading a list of participants in the call might not always be the best idea every time a new user is connected or disconnected from the call. Thereby, in accordance with another aspect of the present invention, just notifications of new specific events are communicated to the rest of participants, thus assuming that the state of the rest of participants have not changed since the last event. For example, just communicating that a certain user-A has been disconnected from the call, or a user-B has joined the call.

Therefore, another indication is provided accordingly with a currently preferred embodiment within the collection of arguments included in a *'Call-Info'* SIP header, said indication being optionally given for each participant in the conference to indicate whether such participant has been connected or disconnected from the call, as well as to allow a call-history tracking for the call:

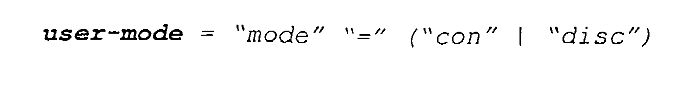

In addition, there is provided a mechanism intended to audit the origin of any conference indication. This mechanism makes use of the new argument below which is included in an amended '*Call-Info*' SIP header in accordance with the invention. This new argument allows the participants to know the particular participant within the call who has informed the others about a possible conference and its participants:

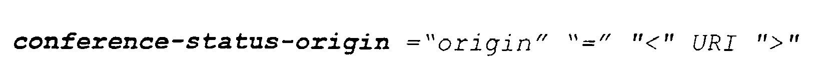

After having described some use cases for certain sub-scenarios within a first scenario in which the 3-Pty Service Controller is located at the SCN domain, it is the turn of a second scenario in which the 3-Pty Service Controller is located at the SIP domain.

In accordance with an aspect of the present invention there are also several sub-scenarios for the above second scenario in which the 3-Pty Service Controller is located at the SIP domain:
- a first sub-scenario wherein a call has been established between a first SIP user (SIP-User-A) and an SCN user (SCN-User-B), whereas a second SIP user (SIP-User-C) requests a new call establishment towards the first SIP user (SIP-User-A).
- a second sub-scenario wherein a call has been established between a first (SIP-User-A) and a second (SIP-User-B) SIP users, and an SCN user (SCN-User-C) requests a new call establishment towards the first SIP user (SIP-User-A).
- a third sub-scenario wherein a call has been established between an SCN user (SCN-User-A) and a first SIP user (SIP-User-B), whereas a second SIP user (SIP-User-C) requests a new call establishment toward the SCN user (SCN-User-A) .

These three sub-scenarios have in common that a Served User in the SIP domain is the one sending or receiving two calls and finally issuing a request to merge both calls into a 3-Pty call. As anticipated above a Served User can be either the calling or the called user in either said two calls. The option chosen for use cases following this are merely a convention under the different above sub-scenarios.

Prior to presenting a currently preferred embodiment for selected use cases, there are some relevant explanations to offer in respect of the SIP domain and in accordance with certain aspects of the present invention. The SIP-User-A, who is the SIP user receiving both calls, is acting as a Conference Server, namely the Service Controller as referred to in the SCN domain, and is thus in charge of mixing the media streams coming from generic User-B and User-C. The SIP-User-A mixes audio streams, sends media originated at User-B to User-C, and sends media originated at User-C to User-B. There is no SIP signalling relationship between generic User-B and User-C, being SIP or SCN users, but all signalling goes through said Conference Server, namely SIP-User-A, or rather the corresponding SIP-UA-A. In other words, there is no media directly exchanged between any user. In particular, both terms, Service Controller and Conference Server, are referred to in the SIP domain to indistinctly identify the same functional entity.

In like manner as for the above first scenario, the Served User (SIP-User-A in this second scenario) is responsible for ensuring that both calls are compatible before mixing the media streams, thus following a similar reasoning to the first scenario where the Service Controller node was located in the SCN domain. In other words, re-negotiation of media capabilities, mainly codecs and transcoding means, must be performed in the Conference Server.

Other conferencing models could be used as well, just following the same principles governing an object of the present invention, that is, all users in a call should be notified that the call involves more users than the caller and the called users themselves. A pre-condition for this mechanism to be applicable in the SIP domain, in accordance with another aspect of the present invention, is that there is no direct contact between the participants in the conference, but rather a Conference Server is acting as a bridge between them. In this respect, the Conference Server or Service Controller may be just a functional module located within the SIP-User-A, but it might be an external node as well. The role of the Conference Server is to mix the incoming media and distribute it to the participants, and to send the incoming SIP signalling to the appropriate users and for the purpose of illustrating preferred embodiments following this, said Conference Server is assumed to be located at the SIP-UA-A associated to the Served User, the SIP-User-A.

A first use case to go through is a 3-Pty call establishment in the above first sub-scenario for the second scenario wherein the Conference Server, the Service Controller node as referred to in the SIP domain, is located at the SIP domain. Fig. 7 shows the different entities and interfaces involved in this use case wherein a significant difference with the use case in Fig. 5, apart from user naming, is the RTP-based interface (S-74), which is intended for sending the audio and media streams mixed for SIP-User-C.

The protocol updates needed for SIP, aforementioned SIP extensions, are the same as the ones proposed above for use cases having the service controller at the SCN domain. Another significant difference compared to the previous use cases is that the conference-related indications are generated by a SIP user for use cases under the presently second scenario. Then, as shown in Fig. 8 and compared to the flow sequence in Fig. 6a, the mapping of the different notifications in the Network Gateway (NGW) follow a reverse order.

The flow sequence in Fig. 8 starts after a call has been established between a first SIP user (SIP-User-A) and an SCN user (SCN-User-B). Then, a second SIP user (SIP-User-C) calls the first SIP user. The SIP-User-A in Fig. 8 puts 'on hold' the SCN-User-B by sending a Re-INVITE SIP method toward the NGW with similar parameters values as in preceding use cases. Once the SCN-User-B is on hold, and not shown in Fig. 8, the SIP-User-A is talking to SIP-User-C until deciding to start a 3-Pty call by mixing the streams coming from the SCN-User-B and the SIP-User-C. The sequence in Fig. 8 continues when the SIP-User-A initiates the 3-Pty call request.

Still another use case is the call establishment for the above third sub-scenario having the conference Server in the SIP domain, as illustrated in Fig. 9 and Fig. 10, wherein a call has been established between a SIP user (SIP-User-A) and a first SCN user (SCN-User-B). T hen, a second SCN user (SCN-User-C) calls the SIP-User-A. The flow sequence in fig. 10 starts when the SIP-User-A puts the first SCN-User-B 'on hold'. Next, after the SIP-User-A has been talking to SCN-User-C, the SIP-User-A decides to start a 3-Pty call by mixing the streams coming from the SCN-User-B and the SCN-User-C. The flow in Fig. 10 shows how the SIP-User-A initiates such process.

The invention is described above in respect of several embodiments in an illustrative and non-restrictive manner. Obviously, many modifications and variations of the present invention are possible in light of the above teachings. The scope of the invention is determined by the claims, and any modification of the embodiments that fall within the scope of these claims is intended to be included therein.

## Claims

1. A telecommunications system for providing Multiparty Conference services between first users (SIP-User-A, SIP-User-B, SIP-User-C) of an Internet Protocol Domain and second users (SCN-User-A, SCN-User-B, SCN-User-C) of a Telephony Domain, wherein media streams from first and second users are transmitted with a first transmission protocol (S-23, S-24) in the Internet Protocol Domain and with a second transmission protocol (S-21, S-22) in the Telephony Domain, whereas multimedia sessions for the corresponding media streams are signalled by a first signalling protocol operating in accordance with a Session Initiation Protocol (S-13, S-14) in the Internet Protocol Domain and by a second signalling protocol (S-11, S-12) in the Telephony Domain, the telecommunication system having:
- first calling means for allowing a first participant (SIP-User-A, SCN-User-A) to establish a first call with a second participant (SIP-User-B, SCN-User-B); and
- second calling means for allowing the first or second participant to act as a Served user for establishing a second call with a third participant (SIP-User-C, SCN-User-C);
and **characterised in that** it comprises:
- communication means for allowing the Served user to merge the first and second calls into a multiparty conference involving at least one first user (SIP-User-A, SIP-User-B, SIP-User-C) and at least one second user (SCN-User-A, SCN-User-B, SCN-User-C) among the participants;
- a Conference Server (LE-A, TR, SIP-UA-A, SIP-UA-B), which is located in the Domain of the Served user, having means for mixing the media streams, and means for signalling the mixed media stream;
- protocol means for transmitting notifications of being involved in a multiparty conference with multiparty conference-related indications at the first (S-13, S-14) and the second signalling protocol (S-11, S-12) through each respective Domain; and
- a Network Gateway (NGW) for inter-working between the Internet Protocol Domain and the Telephony Domain, the Network Gateway having mapping means for mapping multiparty conference-related indications supported at each respective Domain between the first and second signalling protocols.

2. The telecommunications system of claim 1, wherein the first and second users are notified of being involved in a multiparty conference, and are notified of other participants in said multiparty conference, with those multiparty conference-related indications ('Call-Info', CPG) supported at each respective Domain.

3. The telecommunications system of claim 1, wherein the multiparty conference-related indications comprise specific user-related call information and conference-related call information.

4. The telecommunications system of claim 3, wherein the conference-related call information comprises at least one information element selected from a group of information elements that includes:
- a conference status to indicate whether a multiparty conference has been established or disconnected;
- a list of users involved in the conference that may include indications on whether each user is currently connected or disconnected; and
- a conference origin to indicate which user, involved in the conference as the Served user, has originated the multiparty conference-related notifications.

5. The telecommunications system of claim 1, wherein the protocol means for transmitting multiparty conference-related indications, within the Internet Protocol Domain, includes a so-called '*Call-Info*' SIP header.

6. The telecommunications system of claim 1, wherein the Conference Server comprises means for checking compatibility between the users to be connected, and means for selection of the most appropriate codecs.

7. The telecommunications system of claim 1, wherein the Telephony Domain is included in a Switched Circuit Network (SCN).

8. The telecommunications system of claim 7, wherein the Telephony Domain is such that multimedia sessions are signalled by a protocol operating in accordance with an Integrated Services digital network User part Protocol (ISUP).

9. The telecommunications system of claim 1, wherein a Session Initiation Protocol User Agent (SIP-UA-A, SIP-UA-B), which is associated to a Served User (SIP-User-A, SIP-User-B) in the Internet Protocol Domain, is acting as a Conference Server, and is thus in charge of mixing the media streams coming from and sent to other participants in said multiparty conference.

10. A method for providing Multiparty Conference services between first users (SIP-User-A, SIP-User-B, SIP-User-C) of an Internet Protocol Domain and second users (SCN-User-A, SCN-User-B, SCN-User-C) of a Telephony Domain, wherein media streams from first and second users are transmitted with a first transmission protocol (S-23, S-24) in the Internet Protocol Domain and with a second transmission protocol (S-21, S-22) in the Telephony Domain, whereas multimedia sessions for the corresponding media streams are signalled by a first signalling protocol operating in accordance with a Session Initiation Protocol (S-13, S-14) in the Internet Protocol Domain and by a second signalling protocol (S-11, S-12) in the Telephony Domain, the method including the steps of:
- establishing from a first participant (SIP-User-A, SCN-User-A) a first call with a second participant (SIP-User-B, SCN-User-B); and
- establishing from the first or second participant, who acts as a Served user, a second call with a third participant (SIP-User-C, SCN-User-C);
and **characterised by** further comprising the steps of:
- merging from the Served user the first and second calls into a multiparty conference that involves at least one first user (SIP-User-A, SIP-User-B, SIP-User-C) and at least one second user (SCN-User-A, SCN-User-B, SCN-User-C) among the participants;
- mixing the media streams at, and signalling the mixed media stream from, a Conference Server (LE-A, TR, SIP-UA-A, SIP-UA-B) located in the Domain of the Served user;
- transmitting notifications of being involved in a multiparty conference with multiparty conference-related indications at the first (S-13, S-14) and the second signalling protocol through each respective Domain; and
- mapping between the first and second signalling protocols, at a Network Gateway (NGW) for inter-working between the Internet Protocol Domain and the Telephony Domain, those multiparty conference-related indications supported at each respective Domain.

11. The method of claim 10, wherein the step of transmitting notifications of being involved in a multiparty conference with multiparty conference-related indications includes at least one step selected from a group of steps that includes:
- notifying each first user (SIP-User-A, SIP-User-B, SIP-User-C) of the Internet Protocol Domain of being connected to a multiparty conference when requesting the establishment of said multiparty conference for each said first user;
- notifying each second user (SCN-User-A, SCN-User-B, SCN-User-C) of the Telephony Domain of being connected to a multiparty conference when requesting the establishment of said multiparty conference for each said second user;
- notifying each first and second users involved in a multiparty conference of other participants connected to or disconnected from said multiparty conference;
- notifying each first user of the Internet Protocol Domain of being disconnected from a multiparty conference when requesting the disconnection from said multiparty conference for each said first user; and
- notifying each second user of the Telephony Domain of being disconnected from a multiparty conference when requesting the disconnection from said multiparty conference for each said second user.

12. The method of claim 10, wherein the multiparty conference-related indications comprise specific user-related call information and conference-related call information.

13. The method of claim 12, wherein the conference-related call information comprises at least one information element selected from a group of information elements that includes:
- a conference status to indicate whether a multiparty conference has been established or disconnected;
- a list of users involved in the conference that may include indications on whether each user is currently connected or disconnected; and
- a conference origin to indicate which user, involved in the conference as the Served user, has originated the multiparty conference-related notifications.

14. The method of claim 10, further comprising a step of checking at the Conference Server compatibility between the users to be connected, and a step of selecting the most appropriate codecs.

15. The method of claim 11, wherein the steps of notifying the first users (SIP-User-A, SIP-User-B, SIP-User-C) of the Internet Protocol Domain are carried out with multiparty conference-related indications included in a so-called '*Call-Info*' SIP header.

16. The method of claim 11, further comprising a step of notifying the first and the second users of a conference origin to indicate which user, involved in the conference as the Served user, has originated the multiparty conference-related notifications.

17. The method of claim 10, wherein the step of mapping multiparty conference-related indications to the Telephony Domain, where multimedia sessions are signalled by a protocol operating in accordance with an Integrated Services digital network User part Protocol (ISUP), is carried out with a '*Call Progress*' message.

18. The method of claim 10, wherein the step of mixing the media streams coming from and sent to other participants in the multiparty conference is carried out by a Session Initiation Protocol User Agent (SIP-UA), which is associated to the Served user.

## Patentansprüche

1. Telekommunikationssystem zum Bereitstellen von Mehrparteien-Konferenzdiensten zwischen ersten Benutzern (SIP-User-A, SIP-User-B, SIP-User-C) einer Internetprotokolldomäne und zweiten Benutzern (SCN-User-A, SCN-User-B, SCN-User-C) einer Telefondomäne, wobei Medien-Streams von den ersten und zweiten Benutzern in der Internetprotokolldomäne mit einem ersten Übertragungsprotokoll (S-23, S-24) und in der Telefondomäne mit einem zweiten Übertragungsprotokoll (S-21, S-22) übertragen werden, wobei Multimediasitzungen für die entsprechenden Medien-Streams in der Internetprotokolldomäne durch ein entsprechend einem Sitzungseinleitungsprotokoll (S-13, S-14) arbeitendes erstes Signalisierungsprotokoll und in der Telefondomäne durch ein zweites Signalisierungsprotokoll (S-11, S-12) signalisiert werden, wobei das Telekommunikationssystem aufweist:
- erste Rufeinrichtungen, um es einem ersten Teilnehmer (SIP-User-A, SCN-User-A) zu ermöglichen, einen ersten Ruf mit einem zweiten Teilnehmer (SIP-User-B, SCN-User-B) einzurichten, und
- zweite Rufeinrichtungen, um es dem ersten oder dem zweiten Teilnehmer zu ermöglichen, als ein bedienter Benutzer zu handeln, um einen zweiten Ruf mit einem dritten Teilnehmer (SIP-User-C, SCN-User-C) einzurichten,
**dadurch gekennzeichnet, dass** es aufweist:
- Kommunikationseinrichtungen, um es dem bedienten Benutzer zu ermöglichen, den ersten und den zweiten Ruf zu einer Mehrparteienkonferenz zusammenzuführen, die unter den Teilnehmern mindestens einen ersten Benutzer (SIP-User-A, SIP-User-B, SIP-User-C) und mindestens einen zweiten Benutzer (SCN-User-A, SCN-User-B, SCN-User-C) umfasst,
- einen Konferenzserver (LE-A, TR, SIP-UA-A, SIP-UA-B), der sich in der Domäne des bedienten Benutzers befindet und Einrichtungen zum Mischen der Medien-Streams und Einrichtungen zum Signalisieren der gemischten Medien-Streams aufweist,
- Protokolleinrichtungen zum Übertragen von Mitteilungen, dass an einer Mehrparteienkonferenz teilgenommen wird, mit sich auf die Mehrparteienkonferenz beziehenden Hinweisen beim ersten Signalisierungsprotokoll (S-13, S-14) und beim zweiten Signalisierungsprotokoll (S-11, S-12) durch jede jeweilige Domäne, und
- einen Netz-Gateway (NGW) zur Zusammenarbeit zwischen der Internetprotokolldomäne und der Telefondomäne, wobei der Netz-Gateway Zuordnungseinrichtungen zum Zuordnen von an jeder jeweiligen Domäne unterstützten, sich auf die Mehrparteienkonferenz beziehenden Hinweisen zwischen dem ersten und dem zweiten Signalisierungsprotokoll aufweist.

2. Telekommunikationssystem nach Anspruch 1, wobei dem ersten und dem zweiten Benutzer mit diesen an jeder jeweiligen Domäne unterstützten, sich auf die Mehrparteienkonferenz beziehenden Hinweisen ("Call-Info", CPG) mitgeteilt wird, dass sie an einer Mehrparteienkonferenz beteiligt sind und ihnen andere Teilnehmer an der Mehrparteienkonferenz mitgeteilt werden.

3. Telekommunikationssystem nach Anspruch 1, wobei die sich auf die Mehrparteienkonferenz beziehenden Hinweise spezifische benutzerbezogene Rufinformationen und konferenzbezogene Rufinformationen aufweisen.

4. Telekommunikationssystem nach Anspruch 3, wobei die sich auf die Konferenz beziehenden Rufinformationen mindestens ein Informationselement aufweisen, das aus der folgenden Gruppe von Informationselementen ausgewählt ist:
- einem Konferenzstatus, um anzugeben, ob eine Mehrparteienkonferenz eingerichtet oder getrennt wurde,
- einer Liste von Benutzern, die an der Konferenz beteiligt sind, welche Hinweise darüber aufweisen kann, ob jeder Benutzer gegenwärtig verbunden oder getrennt ist, und
- einem Konferenzursprung, um anzugeben, welcher Benutzer, der an der Konferenz als der bediente Benutzer beteiligt ist, die sich auf die Mehrparteienkonferenz beziehenden Benachrichtigungen eingeleitet hat.

5. Telekommunikationssystem nach Anspruch 1, wobei die Protokolleinrichtung zum Übertragen von sich auf die Mehrparteienkonferenz beziehenden Hinweisen innerhalb der Internetprotokolldomäne einen so genannten "Call-Info"-SIP-Header aufweist.

6. Telekommunikationssystem nach Anspruch 1, wobei der Konferenzserver Mittel zum Prüfen der Kompatibilität zwischen den zu verbindenden Benutzern und Mittel zum Auswählen der geeignetsten Codecs aufweist.

7. Telekommunikationssystem nach Anspruch 1, wobei die Telefondomäne in einem Switched Circuit Network (SCN) enthalten ist.

8. Telekommunikationssystem nach Anspruch 7, wobei die Telefondomäne derart ist, dass Multimediasitzungen durch ein Protokoll signalisiert werden, das entsprechend einem Integrated Services digital network User part Protocol (ISUP) arbeitet.

9. Telekommunikationssystem nach Anspruch 1, wobei ein Session Initiation Protocol User Agent (SIP-UA-A, SIP-UA-B), der einem bedienten Benutzer (SIP-User-A, SIP-User-B) in der Internetprotokolldomäne zugeordnet ist, als ein Konferenzserver wirkt und demgemäß dafür verantwortlich ist, die von anderen Teilnehmern in der Mehrparteienkonferenz kommenden und zu diesen gesendeten Medien-Streams zu mischen.

10. Verfahren zum Bereitstellen von Mehrparteien-Konferenzdiensten zwischen ersten Benutzern (SIP-User-A, SIP-User-B, SIP-User-C) einer Internetprotokolldomäne und zweiten Benutzern (SCN-User-A, SCN-User-B, SCN-User-C) einer Telefondomäne, wobei Medien-Streams von den ersten und zweiten Benutzern in der Internetprotokolldomäne mit einem ersten Übertragungsprotokoll (S-23, S-24) und in der Telefondomäne mit einem zweiten Übertragungsprotokoll (S-21, S-22) übertragen werden, wobei Multimediasitzungen für die entsprechenden Medien-Streams in der Internetprotokolldomäne durch ein entsprechend einem Sitzungseinleitungsprotokoll (S-13, S-14) arbeitendes erstes Signalisierungsprotokoll und in der Telefondomäne durch ein zweites Signalisierungsprotokoll (S-11, S-12) signalisiert werden, wobei das Verfahren folgende Schritte aufweist:
- Einrichten eines ersten Rufs mit einem zweiten Teilnehmer (SIP-User-B, SCN-User-B) durch einen ersten Teilnehmer (SIP-User-A, SCN-User-A) und
- Einrichten eines zweiten Rufs mit einem dritten Teilnehmer (SIP-User-C, SCN-User-C) durch den ersten oder den zweiten Teilnehmer, der als ein bedienter Benutzer handelt, **dadurch gekennzeichnet, dass** es ferner folgende Schritte aufweist:
- Zusammenführen des ersten und des zweiten Rufs zu einer Mehrparteienkonferenz, die unter den Teilnehmern mindestens einen ersten Benutzer (SIP-User-A, SIP-User-B, SIP-User-C) und mindestens einen zweiten Benutzer (SCN-User-A, SCN-User-B, SCN-User-C) umfasst, durch den bedienten Benutzer,
- Mischen der Medien-Streams an einem Konferenzserver (LE-A, TR, SIP-UA-A, SIP-UA-B) und Signalisieren der gemischten Medien-Streams durch diesen Konferenzserver, der sich in der Domäne des bedienten Benutzers befindet,
- Übertragen von Mitteilungen, dass an einer Mehrparteienkonferenz teilgenommen wird, mit sich auf die Mehrparteienkonferenz beziehenden Hinweisen beim ersten Signalisierungsprotokoll (S-13, S-14) und beim zweiten Signalisierungsprotokoll durch jede jeweilige Domäne, und
- Zuordnen dieser an jeder jeweiligen Domäne unterstützten sich auf die Mehrparteienkonferenz beziehenden Hinweise zwischen dem ersten und dem zweiten Signalisierungsprotokoll an einem Netz-Gateway (NGW) zur Zusammenarbeit zwischen der Internetprotokolldomäne und der Telefondomäne.

11. Verfahren nach Anspruch 10, wobei der Schritt des Übertragens von Mitteilungen, dass an einer Mehrparteienkonferenz teilgenommen wird, mit sich auf die Mehrparteienkonferenz beziehenden Hinweisen mindestens einen Schritt aufweist, der aus der folgenden Gruppe ausgewählt ist:
- Benachrichtigen jedes ersten Benutzers (SIP-User-A, SIP-User-B, SIP-User-C) der Internetprotokolldomäne, dass er mit einer Mehrparteienkonferenz verbunden wird, wenn das Einrichten der Mehrparteienkonferenz für jeden ersten Benutzer gefordert wird,
- Benachrichtigen jedes zweiten Benutzers (SCN-User-A, SCN-User-B, SCN-User-C) der Telefondomäne, dass er mit einer Mehrparteienkonferenz verbunden wird, wenn das Einrichten der Mehrparteienkonferenz für jeden zweiten Benutzer gefordert wird,
- Benachrichtigen jedes ersten und zweiten an einer Mehrparteienkonferenz teilnehmenden Benutzers, wenn andere Teilnehmer mit der Mehrparteienkonferenz verbunden oder von dieser getrennt werden,
- Benachrichtigen jedes ersten Benutzers der Internetprotokolldomäne, dass er von einer Mehrparteienkonferenz getrennt wird, wenn das Trennen von der Mehrparteienkonferenz für jeden ersten Benutzer gefordert wird, und
- Benachrichtigen jedes zweiten Benutzers der Telefondomäne, dass er von einer Mehrparteienkonferenz getrennt wird, wenn das Trennen von der Mehrparteienkonferenz für jeden zweiten Benutzer gefordert wird.

12. Verfahren nach Anspruch 10, wobei die sich auf die Mehrparteienkonferenz beziehenden Hinweise spezifische benutzerbezogene Rufinformationen und konferenzbezogene Rufinformationen aufweisen.

13. Verfahren nach Anspruch 12, wobei die sich auf die Konferenz beziehenden Rufinformationen mindestens ein Informationselement aufweisen, das aus der folgenden Gruppe von Informationselementen ausgewählt ist:
- einem Konferenzstatus, um anzugeben, ob eine Mehrparteienkonferenz eingerichtet oder getrennt wurde,
- einer Liste von Benutzern, die an der Konferenz beteiligt sind, welche Hinweise darüber aufweisen kann, ob jeder Benutzer gegenwärtig verbunden oder getrennt ist, und
- einem Konferenzursprung, um anzugeben, welcher Benutzer, der an der Konferenz als der bediente Benutzer beteiligt ist, die sich auf die Mehrparteienkonferenz beziehenden Benachrichtigungen eingeleitet hat.

14. Verfahren nach Anspruch 10, ferner mit einem Schritt, in dem an dem Konferenzserver die Kompatibilität zwischen den zu verbindenden Benutzern geprüft wird, und einem Schritt, in dem die geeignetsten Codecs ausgewählt werden.

15. Verfahren nach Anspruch 11, wobei die Schritte des Benachrichtigens der ersten Benutzer (SIP-User-A, SIP-User-B, SIP-User-C) der Internetprotokolldomäne mit in einem so genannten "Call-Info"-SIP-Header enthaltenen, sich auf die Mehrparteienkonferenz beziehenden Hinweisen ausgeführt werden.

16. Verfahren nach Anspruch 11, ferner mit einem Schritt, in dem die ersten und die zweiten Benutzer über einen Konferenzursprung benachrichtigt werden, um anzugeben, welcher Benutzer, der als der bediente Benutzer an der Konferenz beteiligt ist, die sich auf die Mehrparteienkonferenz beziehenden Mitteilungen eingeleitet hat.

17. Verfahren nach Anspruch 10, wobei der Schritt des Zuordnens von sich auf die Mehrparteienkonferenz beziehenden Hinweisen zur Telefondomäne, wobei Multimediasitzungen durch ein Protokoll signalisiert werden, das entsprechend einem Integrated Services digital network User part Protocol (ISUP) arbeitet, mit einer "Call Progress"-Nachricht ausgeführt wird.

18. Verfahren nach Anspruch 10, wobei der Schritt des Mischens der Medien-Streams, die von anderen Teilnehmern in der Mehrparteienkonferenz kommen und zu diesen gesendet werden, durch einen Session Initiation Protocol User Agent (SIP-UA), der dem bedienten Benutzer zugeordnet ist, ausgeführt wird.

## Revendications

1. Système de télécommunications pour fournir des services de conférence à plusieurs entre des premiers utilisateurs (SIP-User-A, SIP-User-B, SIP-User-C) d'un domaine de protocole Internet et des seconds utilisateurs (SCN-User-A, SCN-User-B, SCN-User-C) d'un domaine de téléphonie, dans lequel des flux de médias des premiers et seconds utilisateurs sont transmis avec un premier protocole de transmission (S-23, S-24) dans le domaine de protocole Internet et avec un second protocole de transmission (S-21, S-22) dans le domaine de téléphonie, tandis que des sessions multimédias pour les flux de médias correspondants sont signalées par un premier protocole de signalisation fonctionnant conformément à un protocole d'ouverture de session (S-13, S-14) dans le domaine de protocole Internet et par un second protocole de signalisation (S-11, S-12) dans le domaine de téléphonie, le système de télécommunications ayant :
des premiers moyens d'appel pour permettre à un premier participant (SIP-User-A, SCN-User-A) d'établir un premier appel avec un deuxième participant (SIP-User-B, SCN-User-B) ; et
- des seconds moyens d'appel pour permettre à un premier ou à un deuxième participant d'agir en tant qu'utilisateur servi pour établir un second appel avec un troisième participant (SIP-User-C, SCN-User-C) ;
et **caractérisé en ce qu'**il comprend :
- des moyens de communication pour permettre à l'utilisateur servi de fusionner les premier et second appels en une conférence à plusieurs impliquant au moins un premier utilisateur (SIP-User-A, SIP-User-B, SIP-User-C) et au moins un second utilisateur (SCN-User-A, SCN-User-B, SCN-User-C) parmi les participants ;
- un serveur de conférence ((LE-A, TR, SIP-UA-A, SIP-UA-B), lequel est situé dans le domaine de l'utilisateur servi, ayant des moyens pour mélanger les flux de médias, et des moyens pour signaler le flux de médias mélangé ;
- des moyens de protocole pour transmettre des notifications d'implication dans une conférence à plusieurs avec des indications associées à une conférence à plusieurs dans le premier (S-13, S-14) et le second protocole de signalisation (S-11, S-12) à travers chaque domaine respectif ; et
- une passerelle réseau (NGW) pour interagir entre le domaine de protocole Internet et le domaine de téléphonie, la passerelle réseau ayant des moyens de mappage pour mapper des indications associées à une conférence à plusieurs supportées dans chaque domaine respectif entre les premier et second protocoles de signalisation.

2. Système de télécommunications selon la revendication 1, dans lequel les premier et second utilisateurs sont informés de leur implication dans une conférence à plusieurs, et sont informés des autres participants à ladite conférence à plusieurs, ces indications associées à une conférence à plusieurs ("Info-Appel", CPG) étant supportées dans chaque domaine respectif.

3. Système de télécommunications selon la revendication 1, dans lequel les indications associées à une conférence à plusieurs comportent des informations d'appel associées à un utilisateur spécifiques et des informations d'appel associées à une conférence.

4. Système de télécommunications selon la revendication 3, dans lequel les informations d'appel associées une conférence comportent au moins un élément d'informations sélectionné à partir d'un groupe d'éléments d'informations qui inclut :
- un état de conférence pour indiquer si une conférence à plusieurs à été établie ou déconnectée ;
- une liste d'utilisateurs impliqués dans la conférence qui peut inclure des indications spécifiant si chaque utilisateur est actuellement connecté ou déconnecté ; et
- une origine de la conférence pour indiquer quel utilisateur, impliqué dans la conférence en tant qu'utilisateur servi, a émis les notifications associées à la conférence à plusieurs.

5. Système de télécommunications selon la revendication 1, dans lequel les moyens de protocole pour transmettre des indications associées à une conférence à plusieurs, dans le domaine de protocole Internet, incluent un en-tête SIP appelé "*Call-Info*".

6. Système de télécommunications selon la revendication 1, dans lequel le serveur de conférence comporte des moyens pour contrôler la compatibilité entre les utilisateurs à connecter, et des moyens pour la sélection les codecs les plus appropriés.

7. Système de télécommunications selon la revendication 1, dans lequel le domaine de téléphonie est inclus dans un réseau à commutation de circuit (SCN).

8. Système de télécommunications selon la revendication 7, dans lequel le domaine de téléphonie est tel que des sessions multimédias sont signalées par un protocole opérant conformément à un protocole de réseau numérique à intégration de services partie usager (ISUP).

9. Système de télécommunications selon la revendication 1, dans lequel un agent d'utilisateur de protocole d'ouverture de session (SIP-UA-A, SIP-UA-B), lequel est associé à un utilisateur servi (SIP-User-A, SIP-User-B) dans le domaine de protocole Internet, agit en tant que serveur de conférence, et est ainsi chargé de mélanger les flux de médias provenant des autres participants à ladite conférence à plusieurs et envoyés à ceux-ci.

10. Procédé pour fournir des services de conférence à plusieurs entre des premiers utilisateurs (SIP-User-A, SIP-User-B, SIP-User-C) d'un domaine de protocole Internet et des seconds utilisateurs (SCN-User-A, SCN-User-B, SCN-User-C) d'un domaine de téléphonie, dans lequel des flux de médias des premiers et seconds utilisateurs sont transmis avec un premier protocole de transmission (S-23, S-24) dans le domaine de protocole Internet et avec un second protocole de transmission (S-21, S-22) dans le domaine de téléphonie, tandis que des sessions multimédias pour les flux de médias correspondants sont signalées par un premier protocole de signalisation fonctionnant conformément à un protocole d'ouverture de session (S-13, S-14) dans le domaine de protocole Internet et par un second protocole de signalisation (S-11, S-12) dans le domaine de téléphonie, le procédé incluant les étapes de :
- établir à partir d'un premier participant (SIP-User-A, SCN-User-A) un premier appel avec un deuxième participant (SIP-User-B, SCN-User-B) ; et
- établir à partir d'un premier ou deuxième participant, lequel agit en tant qu'utilisateur servi, un second appel avec un troisième participant (SIP-User-C, SCN-User-C) ;
et **caractérisé en ce qu'**il comprend en outre les étapes de :
- fusionner à partir de l'utilisateur servi les premier et second appels en une conférence à plusieurs qui implique au moins un premier utilisateur (SIP-User-A, SIP-User-B, SIP-User-C) et au moins un second utilisateur (SCN-User-A, SCN-User-B, SCN-User-C) parmi les participants ;
- mélanger les flux de médias dans un serveur de conférence ((LE-A, TR, SIP-UA-A, SIP-UA-B) situé dans le domaine de l'utilisateur servi et signaler le flux de médias mélangé depuis celui-ci ;
- transmettre des notifications indiquant une implication dans une conférence à plusieurs avec des indications associées à une conférence à plusieurs dans le premier (S-13, S-14) et le second protocole de signalisation (S-11, S-12) à travers chaque domaine respectif ; et
- effectuer un mappage entre les premier et second protocoles de signalisation, dans une passerelle réseau (NGW) pour interagir entre le domaine de protocole Internet et le domaine de téléphonie, ces indications associées à une conférence à plusieurs étant supportées dans chaque domaine respectif.

11. Procédé selon la revendication 10, dans lequel l'étape consistant à transmettre des notifications indiquant l'implication dans une conférence à plusieurs avec des indications associées à une conférence à plusieurs inclut au moins une étape sélectionnée parmi un groupe d'étapes qui inclut les étapes suivantes :
- notifier à chaque premier utilisateur (SIP-User-A, SIP-User-B, SIP-User-C) du domaine de protocole Internet qu'il est connecté à une conférence à plusieurs lors de la demande d'établissement de ladite conférence à plusieurs pour chacun desdits premiers utilisateurs ;
- notifier à chaque second utilisateur (SCN-User-A, SCN-User-B, SCN-User-C) du domaine de téléphonie qu'il est connecté à une conférence à plusieurs lors de la demande d'établissement de ladite conférence à plusieurs pour chacun desdits seconds utilisateurs ;
- notifier à chacun des premiers et seconds utilisateurs impliqués dans une conférence à plusieurs quels sont les autres participants connectés ou déconnectés de ladite conférence à plusieurs ;
- notifier à chaque premier utilisateur du domaine de protocole Internet qu'il est déconnecté d'une conférence à plusieurs lors de la demande de déconnexion de ladite conférence à plusieurs pour chacun desdits premiers utilisateurs, et
- notifier à chaque second utilisateur du domaine de téléphonie qu'il est déconnecté d'une conférence à plusieurs lors de la demande de déconnexion de ladite conférence à plusieurs pour chacun desdits seconds utilisateurs.

12. Procédé selon la revendication 10, dans lequel les indications associées à une conférence à plusieurs comportent des informations d'appel associées à un utilisateur spécifiques et des informations d'appel associées à une conférence.

13. Procédé selon la revendication 12, dans lequel les informations d'appel associées à une conférence comportent au moins un élément d'informations sélectionné à partir d'un groupe d'éléments d'informations qui inclut :
- un état de conférence pour indiquer si une conférence à plusieurs a été établie ou déconnectée ;
- une liste d'utilisateurs impliqués dans la conférence qui peut inclure des indications indiquant si chaque utilisateur est actuellement connecté ou déconnecté ; et
- une origine de la conférence pour indiquer quel utilisateur, impliqué dans la conférence en tant qu'utilisateur servi, a émis les notifications associées à la conférence à plusieurs.

14. Procédé selon la revendication 10, comportant en outre une étape de contrôler au niveau du serveur de conférence la compatibilité entre les utilisateurs à connecter, et une étape de sélectionner les Codec les plus appropriés.

15. Procédé selon la revendication 11, dans lequel les étapes de notification aux premiers utilisateurs (SIP-User-A, SIP-User-B, SIP-User-C) du domaine de protocole Internet sont exécutées avec des indications associées à une conférence à plusieurs incluses dans un en-tête SIP appelé "*Call-info*"*.*

16. Procédé selon la revendication 11, comportant en outre une étape de notifier aux premier et second utilisateurs une origine de la conférence afin d'indiquer quel utilisateur, impliqué dans la conférence en tant qu'utilisateur servi, a émis les notifications associées à la conférence à plusieurs.

17. Procédé selon la revendication 10, dans lequel l'étape de mappage des indications associées à, une conférence à plusieurs dans le domaine de téléphonie, lorsque des sessions multimédias sont signalées par un protocole opérant conformément à un protocole de réseau numérique à intégration de services partie usager (ISUP), est exécutée avec un message "appel en cours".

18. Procédé selon la revendication 10, dans lequel l'étape de mélanger les flux de médias provenant des autres participants à la conférence à plusieurs et envoyés à ceux-ci est exécutée par un agent utilisateur de protocole d'ouverture de session (SIP-UA), lequel est associé à l'utilisateur servi.
